# EUROPEAN PATENT APPLICATION

(11) **EP 4 177 066 A1**
(43) Date of publication of application: **10.05.2023**
(21) Application number: 21306568.3
(22) Date of filing: 09.11.2021
(51) Int. Cl.: B42D 25/378, B42D 25/41, B41M 5/28, B41M 3/14

(54) **DATA CARRIERS AND METHODS OF PRODUCING THEM**

(71) Applicant: Thales Dis France SAS, 92190 Meudon (FR)
(72) Inventor: POHJOLA, Teemu, 13600 LA CIOTAT (FR); LARINA, Nina, 13600 LA CIOTAT (FR); GRIGORESCU, Sorin, 13600 LA CIOTAT (FR); ANDRIEUX, David, 13600 LA CIOTAT (FR)
(74) Representative: Lotaut, Yacine Diaw

(57) **Abstract**

A data carrier (1) comprises at least one carrier body (2), at least one printing layer (3), at least one marking layer (4), and at least one security element (5). The carrier body (2) can comprise a top surface (6) and the printing layer (3) can be arranged on the top surface (6). The printing layer (3) and the marking layer (4) are arranged at least partially above one another with respect to an extension direction (E). The marking layer (4) is configured to interact with impinging electromagnetic radiation (R) such, that a marking element (8) is generated in the marking layer (4) upon the irradiation of electromagnetic radiation (R). The security element (5) comprises at least part of the printing layer (3) and at least part of the marking layer (4). The printing layer (3) comprises at least one reactive element (9) that is configured to interact with impinging electromagnetic radiation (R) such, that a reacted element (10) is generated in the printing layer (3) upon the irradiation of electromagnetic radiation (R). The marking element (8) can be an opaque element. The security element (5) furthermore comprises the reacted element (10) and the marking element (8).

## Description

### TECHNICAL FIELD

The present invention relates to a data carrier as claimed in claims 1 and 3, to a secured article comprising or consisting of such a data carrier as claimed in claim 12, and to a method of producing a data carrier as claimed in claims 13 and 14.

### PRIOR ART

All existing solutions of graphical personalization of security documents in multiple colors are aiming towards ever-higher levels of security, and at the same time achieving good quality of image and color reproduction, and technological simplicity.

In the easiest way, color personalization can be achieved when printing color images using conventional printing processes.

For example, inkjet (DoD) technology is more and more frequently used for graphical personalization of security documents, such as identity documents and payment cards. An inkjet-personalized image can be for instance a sequence of alphanumeric characters or an identity picture printed on a surface of the document or the card, with or without protecting layer(s) on top of it. The recent-generation inkjet inks provide very good adhesion to the surface of the document plastic materials (PC, PVC, ...), and higher resistance to abrasion and chemical agents than that of the plastics themselves (thus fulfilling an additional wear protection function). Other advantages of the DoD solutions proposed on the market include reproduction of images with high-resolution and high-quality color rendering.

Surface printing solutions ("Color on PC") are however considered to have a lower initial level of security than that of documents where the images are placed inside a sealed polycarbonate body ("Color in PC"), and need extra protection. As one of the ways of making the document more forgery-proof, some manufacturers propose personalization solutions combining black laser marking inside a laser-engravable document layer (i.e. inside the plastic document body) with the color inkjet-printed image on the surface.

Thus, the personalized image, such as an identity picture, is generated as two matching images located in two different document layers. For example, the color inkjet-printed image on the surface is doubled and completed by a black-and-white laser-engraved one inside the document body. However, this latter configuration still has a disadvantage that the security element such as the image can be modified, for instance, by scratching off a part of the surface print forming the security element using sandpaper and covering the laser marks inside with an opaque overprint on the surface.

An alternative solution for color personalization is the "Color Laser Sealer" elements - a very secure personalization technology for polycarbonate data carriers that represents laser marking in multiple colors inside a fully sealed polycarbonate document body. The color reproduction process is based on selective bleaching of differently colored pigments and implements unique inks and unique lasers not accessible to counterfeiters. In addition, the multicolor laser-marked image located in a separate layer of the document is also doubled and enhanced by a conventional black marking in a different layer of the document.

The corresponding elements still lack in first level verification means of the authentic technology used for personalization.

Polycarbonate data carriers are also known for their range of optically variable personalized security features such as CLI/MLI - which are usually implemented as separate elements and require supplementary manufacturing steps. Integrating an optically variable element directly into the main graphical image would represent both an additional level of security and a technological advantage.

### SUMMARY OF THE INVENTION

It is an object of the present invention to overcome the drawbacks of the state of the art. In particular, it is an object to provide a data carrier of significantly improved level of security while based on the existing technologies known in the art and with introducing only a minor modification into their manufacturing process.

This object is achieved with the data carrier according to claims 1 and 3.

In fact, in a first aspect a data carrier is provided, wherein the data carrier comprises at least one carrier body, at least one printing layer, at least one marking layer, and at least one security element. The carrier body comprises a top surface, wherein the printing layer is arranged on the top surface of the carrier body. The printing layer and the marking layer are arranged at least partially above one another with respect to an extension direction. The marking layer is configured to interact with impinging electromagnetic radiation such, that a marking element is generated in the marking layer upon the irradiation of electromagnetic radiation. The security element comprises at least part of the printing layer and at least part of the marking layer. The printing layer comprises at least one reactive element that is configured to interact with impinging electromagnetic radiation such, that a reacted element is generated in the printing layer upon the irradiation of electromagnetic radiation. The security element furthermore comprises the reacted element and the marking element.

The marking element preferably is a bleached element and/or an opaque element and/or a color-changed element. Consequently, the marking layer is preferably configured to be bleached and/or ablated upon the irradiation of electromagnetic radiation. Or, in other words, the marking layer is preferably configured to change a translucency or an opacity or color upon the irradiation of electromagnetic radiation and/or to be at least partially removed upon the irradiation of electromagnetic radiation.

Additionally or alternatively, the data carrier preferably comprises a surface structure that is formed by two or more, preferably by a plurality of reacted elements.

The surface structure preferably has a relief structure and/or provides a morphology, i.e. it preferably corresponds to a structure that does not extend within a single plane only but comprises one or more protruding parts and/or one or more recessed parts that extend from and/or into a plane running perpendicularly to the extension direction. Said surface structure is preferably generated upon an ablation or evaporation of the printing layer, e.g. in the case where the reacted elements correspond to ablated elements or evaporated elements, see further below. However, obtaining other types of reacted elements is also conceivable, such as for instance via a "foaming"-type reaction resulting in a "positive relief" on the surface.

Such a surface structure preferably provides a tactile effect that can be perceived by a person touching the surface structure. Said tactile effect adds extra security. Said surface structure could furthermore be detected for instance by visually impaired persons. It is however, likewise conceivable that the surface structure is detectable by dedicated equipment such as a profilometer, whereby an additional security is provided as well.

Moreover, the said security element can be designed in such a way that the marking element(s) and the reacted element(s) can be intrinsically linked to each other and/or complete each other. For example, if marking element(s) are said to constitute a positive part of the security element such as a positive image, the reacted element(s) of said surface structure could be generated such as to constitute a negative part of the security element such as the negative image. For instance, if the printing layer comprises a radiation-reactive black ink as mentioned further below, two different reactions can be achieved in the same laser pass in two different material layers: 1) the black ink can be removed from the top surface where it was present, and 2) where there was no black ink - a black marking is generated in the marking layer. Thus, the same image is imprinted in the printing layer (as a negative relief) and in the marking layer (as a positive image), and wherein said images are aligned with respect to one another and produced in the same technological step.

In a second aspect a data carrier is provided, wherein the data carrier comprises at least one carrier body, at least one printing layer, at least one marking layer, and at least one security element. The printing layer and the marking layer are arranged at least partially above one another with respect to an extension direction. The marking layer is configured to interact with impinging electromagnetic radiation such, that a marking element is generated in the marking layer upon the irradiation of electromagnetic radiation. The security element comprises at least part of the printing layer and at least part of the marking layer. The printing layer comprises at least one reactive element that is configured to interact with impinging electromagnetic radiation such, that a reacted element is generated in the printing layer upon the irradiation of electromagnetic radiation. The marking element is an opaque element. The security element furthermore comprises the reacted element and the marking element.

Since the marking element is an opaque element, the marking layer is preferably configured to change a translucency or an opacity upon the irradiation of electromagnetic radiation. Furthermore, the printing layer and/or the marking layer are preferably arranged within the card body, i.e. that they form part of the card body.

The present invention according to the first aspect as well as the second aspect concerns a data carrier that comprises at least one security element, wherein said security element is constituted by at least part of a printing layer comprising a reacted element and a marking layer comprising a marking element. In contrast to prior art solutions, wherein the security elements are constituted by the printing layer, the marking layer and the marking element only, the present invention adds extra security by additionally providing the reacted element in the printing layer. This additional security is provided by the printing layer comprising a reactive element being reactive to electromagnetic radiation on the one side and by the marking layer being reactive to electromagnetic radiation as well on the other side. Hence, when the data carrier is processed by irradiating it with electromagnetic radiation, the printing layer and the marking layer are related or linked to one another by the thus generated marking element and reacted element. As a consequence, any further modification of one of these layers in an attempt of forgery will only affect the layer concerned but not the other layer, which will make the forgery readily recognizable.

For instance, if the marking layer corresponds to a laser-engravable layer and the marking element corresponds to a laser-engraved element in said laser-engravable layer that is generated upon the irradiation of laser radiation in a laser marking process, the additional security brought by the present invention is that the printing layer is also modified during the laser marking process as well because of its reactive element. Said laser marking process can also be referred to as a personalization process, wherein personalized information such as personal data of the holder of the data carrier, e.g. a data of birth or an image of the holder, are attributed to the data carrier. Hence, the security element can also be seen as a personalization element. Any explanations made herein with regard to a security element does likewise apply to a personalization element and vice versa.

To this end it is particularly preferred that the printing layer provides at least a first part of the security element and that the marking layer provides at least a second part of the security element. In other words, the security element is preferably distributed over the printing layer and the marking layer. For instance, if the security element corresponds to an image of the holder of the data carrier, it is preferred that a first part of said image such as half of a face is provided by the printing layer and that a second part of said image such as the second half of said face is provided by the marking layer. Another example of such a multi-part security element is an optically variable element, wherein e.g. a grid or a viewing filter corresponds to a first part of said optically variable element and is provided by the printing layer, and an image or the like corresponds to a second part of said optically variable element and is provided by the marking layer. In each case, the provision of the reacted element and the marking element additionally links or relates the two parts to one another, see also further below.

As mentioned initially, the data carrier comprises a carrier body. The marking layer is preferably arranged within the carrier body. It is furthermore preferred that the carrier body comprises one or more, preferably several layers that are connected to one another. It is particularly preferred that the carrier body corresponds to a card body as it is known in the field of the art, i.e. a body comprising one or more layers, preferably a plurality of layers such as transparent plastic layers such as polycarbonate (PC) or polyvinyl chloride (PVC). It is furthermore preferred that said layers are laminated to one another. In the event that the carrier body comprises one or more such layers, it is preferred that the marking layer is connected to these layers via lamination as well. The carrier body comprises the top surface and an opposing bottom surface. The top surface is provided by an uppermost layer of the carrier body and the bottom surface is provided by a lowermost layer of the carrier body, respectively. The extension direction preferably extends from the top surface of the carrier body towards the bottom surface of the carrier body, and, when seen along this extension direction, the printing layer is preferably arranged before the marking layer with respect to the extension direction. In other words, the extension direction can be seen as a vertical direction.

The data carrier preferably defines a top side and an opposing bottom side. In a used state of the data carrier, the top side is facing an observer of the data carrier. The top surface of the carrier body preferably forms the top side of the data carrier or is at least arranged in a region of the top side of the data carrier. The bottom surface of the carrier body preferably forms the bottom side of the data carrier or is at least arranged in a region of the bottom side of the data carrier. Hence, the printing layer is preferably arranged in closer proximity to the top side of the data carrier than the marking layer.

It should be noted that the data carrier can comprise two or more printing layers and/or two or more marking layers and/or two or more security elements and/or two or more, preferably a plurality of marking elements, and/or two or more, preferably a plurality of reacted elements. Any explanations provided with respect to only one of these components likewise apply to two or more of these components and vice versa.

In the event that the data carrier comprises two or more printing layers, it is conceivable that at least one of these printing layers is arranged within the carrier body.

The reacted element and the marking element are preferably aligned with respect to one another according to an alignment arrangement. The alignment arrangement preferably corresponds to a spatial arrangement of the marking element and the reacted element with respect to one another and preferably with respect to the extension direction and/or with respect to a transverse direction extending perpendicularly with respect to the extension direction.

The alignment arrangement can be seen as a link or interplay that is established between the reacted element and the marking element and consequently between the printing layer and the marking layer, in particular between the at least first part of the security element and the at least second part of the security element. In other words, an additional interplay or link or alignment is generated between the two or more parts of the security element being located on two or more different layers by the marking element and the reacted element. A forgery attempt will result in a loss of said alignment or link or interplay of the security element. In other words, the marking element and the marking layer and the reacted element and the printing layer can be seen as composing an entity allowing to infer additional information or providing an additional functionality to the security element, if compared to a simple combination of all these elements. This entity is achieved by the correlated spatial arrangement of these elements. The information can be personal or unique data, readable or detectable only in the given arrangement, see also further below. Additional functionality can be the possibility of an authenticity check of the security element by controlling the arrangement preservation in a laboratory environment, for example.

Said alignment or link or interplay preferably is a geometrical alignment or geometrical link or geometrical interplay. That is, it is preferred that the alignment arrangement corresponds to a particular geometrical arrangement or, in other words, to a particular spatial arrangement of one or more particular marking elements and one or more particular reacted elements. Said geometrical arrangement or spatial arrangement is generated by the irradiation of electromagnetic radiation when the reacted element(s) and the marked element(s) are produced.

The reacted element and the marking element are particularly preferably arranged above one another, i.e. congruent, with respect to the extension direction. For instance, by irradiating electromagnetic radiation onto the data carrier along the extension direction, the marking element and the reacted element will be generated at different positions with respect to the extension direction however at a same position with respect to a transverse direction running perpendicularly to the extension direction. When referring to the extension direction as the vertical direction and to the transverse direction as the horizontal direction, the reacted element and the marking element can be said to be at a same horizontal position however at different vertical positions. However, it is likewise conceivable that the marking element and the reacted element are arranged at different positions with respect to the transverse direction, or are arranged with a defined offset with respect to the transverse direction.

The reactive element is preferably configured to absorb or to scatter the electromagnetic radiation of the employed irradiation source. The reactive element preferably comprises a reactive pigment and/or a reactive additive and/or a reactive colorant and/or an element being configured to absorb or to block and/or modify a propagation of impinging electromagnetic radiation, an example of the latter being for instance a filler element being configured to scatter impinging electromagnetic radiation.

The reactive element is preferably commercially available in the form of inks applicable in conventional printing or coating processes. Additionally or alternatively, reactive additives can be acquired as commercially available raw materials and added to commercially available inks. As a non-limiting example of reactive additives, the laser-reactive fillers of the Iriotec range of Merck could be used.

An element being configured to block and/or modify a propagation of the impinging electromagnetic radiation preferably results in the generation of at least one reacted element. In other words, said element may not necessarily react itself to the impinging electromagnetic radiation but provokes the modification of the printing layer in such a way that at least one reacted element is generated, e.g. by a modification of the direction of the laser beam. For example, any kind of chemically and/or physically neutral filler (e.g. glass, metal, mineral particles) having a reactive index being sufficiently different from that of medium, here of the printing layer and/or of reactive elements of another type, and a particle size distribution maximum comparable to or higher than the wavelength of the electromagnetic radiation, will scatter the electromagnetic radiation. As a consequence, scattered radiant energy gets transformed into heat and induces evaporation or decomposition of the printing layer and/or of other reactive elements.

The reacted element preferably is a bleached element and/or an ablated element and/or an evaporated element and/or a colour-changed element and/or an opaque element and/or a bubbling element and/or a bulging element and/or a blurry element and/or a fuzzy element. In other words, the reacted element preferably is a product or a result of an interaction of the electromagnetic radiation with the reactive element. Said product or result can be a bleaching (loss of color) or other change of color, or evaporation, or ablation, etc., which is herein referred to as bleached element, evaporated element, ablated element, etc.

Thus, the printing layer, in particular the reactive element, is preferably configured to be bleached. That is, the printing layer, in particular the reactive element, is preferably configured to change a translucency or an opacity upon the irradiation of electromagnetic radiation. However, it is likewise conceivable that the printing layer, in particular the reactive element, is configured to be ablated and thus to be at least partially removed upon the irradiation of electromagnetic radiation. Additionally or alternatively it is likewise conceivable that the printing layer, in particular the reactive element, is configured to generate one or more gases upon an irradiation of electromagnetic radiation. The thus produced gases preferably result in bubbling and/or bulging and/or blurry and/or fuzzy elements.

The printing layer is preferably provided in the form of ink(s) which is (are) applied via conventional printing and/or coating methods, such as for instance using inkjet printing, silk-or stencil screen printing, offset printing, thermal transfer, flexography, or any spraying or dispensing methods, etc. Consequently, the reactive elements are preferably provided as part of the print, for example as at least one of the inks. The inks and the resulting printed elements, apart from the abovementioned reactive additives can comprise one or more further components, such as binder polymers, additives, fillers, etc., as they are known in the art. It is furthermore conceivable that the binder / film-forming polymer component of the ink can be itself reactive to the impinging electromagnetic radiation. In this case the polymer could constitute the printing layer itself. Or, if the polymer is not reactive, a reactive element such as a filler could be added specifically for this purpose. One or more of the inks constituting the printing layer may also have other specific functions such as being a thermochromic ink, a photochromic ink, a special effect ink etc. These additional functions may be related or unrelated to the laser reactivity.

The marking layer preferably comprises or consists of a C-doped layer and/or of at least one plastics and/or of one or more polymers, the marking layer particularly preferably comprises or consists of polycarbonate and/or polyvinyl chloride and/or polyethylene terephthalate and/or polyethylene and/or cross-linked polyethylene and/or polypropylene and/or copolymers thereof such as PETG and/or mixtures thereof.

A preferred reactive element is the black ink already present in practically all inkjet printing solutions. That is, it is conceivable to use an ink that already comprises the reactive element.

Hence, a preferred data carrier comprises a reactive element being a common or conventional black ink with carbon black filler and a laser-markable C-doped plastic marking layer. A Nd:YAG laser is preferably used as the personalization laser.

An example of integration of a security element according to the present invention into a conventional graphical personalization process of a data carrier according to the first aspect is outlined further below.

In color reproduction with conventional printing solutions, multi-colored images are usually obtained from a set or color primaries defined for the given printing process, for example in a four-color process, made according to the so-called CMYK color model, the employed primaries are Cyan ("C"), Magenta ("M"), Yellow ("Y") and BlacK (Key) components, often provided as four separate inks. In some prior art solutions for producing a secure color image in security documents, the four channels are distributed into two levels that can be named in the sense of the present invention; the printing layer is printed using the C, M and Y components of commercially available colored (inkjet) inks, and that the blacK ("Key") component is provided as black laser markings inside a laser-engravable layer (marking layer) and is used as the marking element in the sense of the present invention. The black component can also be provided both as the black marking in the marking layer and the fourth ink in the printing layer, that is the black component can be split between the two different layers of the data carrier. In this latter case it is desired that a ratio between the black inkjet ink and the opaque black marking is such, that the resulting security element or personalization element remains visually balanced. In the case when the black ink is IR-absorbing, for instance it comprises a carbon black pigment, the resulting print can be reactive to the most frequently used personalization lasers in the NIR range, such as 1064nm Nd:YAG laser, and often can be removed by the irradiation of electromagnetic radiation The same NIR laser can also produce the black marking (marking element). Thus, adding the reactive black ink to the printing layer in pre-defined areas can allow producing a double-layer laser marking with an additional level of security according to the present invention.

Another example of integration of a security element according to the present invention into a graphical personalization process of a data carrier according to the second aspect is outlined further below.

The data carrier according to the second aspect of the invention preferably comprises security elements or personalization elements in the form of color elements being provided according to the so called Color Laser Shield technology. To this end it is preferred that C, M and Y components such as CMY pigments are printed onto one or more layers of the carrier body, e.g. onto one or more plastic layers such as on a polycarbonate (PC) or polyvinyl chloride (PVC) layer, wherein these components constitute the reactive elements that selectively form reacted elements upon a selective irradiation with matching electromagnetic radiation. The expression "matching electromagnetic radiation" is understood as electromagnetic radiation being of a wavelength that is absorbed by a particular CMY component, whereupon the absorbing particular CMY component is transformed into the reacted element. For instance, a printed mixture of CMY pigments can be selectively bleached by selectively irradiating them with electromagnetic radiation in the red, green and blue ranges of the visible electromagnetic spectrum correspondingly,. The marking elements in the marking layer could be generated by irradiating electromagnetic radiation in the NIR region of the electromagnetic radiation and/or by a using a different source of electromagnetic radiation. That is, the reactive element does not need to be black, and the electromagnetic radiation causing the reaction of the reactive element into the reacted element such as a color reaction does not need to be in the infrared region of the electromagnetic spectrum nor does it need to be the same electromagnetic radiation as is used for generating the marking element in the marking layer. And while it is conceivable to use the black (or gray scale) component in both the printing layer reaction, i.e. in the reaction of the reactive elements to the reacted elements, and in the marking layer, the former may be already the unmarked state. In other words, when in inkjet print the black is printed and the laser process removes the black, in the bleaching process the starting point may be black and the reaction removing colors.

However, it should be noted that the CMYK color model can likewise be applied in the data carrier according to the second aspect and/or that the Color Laser Shield technology is applied in the data carrier according to the first aspect.

Furthermore, it is likewise conceivable to take a commercial ink / fluid/ varnish etc. which is printed on its own and that does not react to the selected source of electromagnetic radiation, and to add to it a compatible reactive element (for instance in a powder form), so that the resulting prints are rendered reactive. For instance, it is conceivable to screen-print an additional ink comprising metallic pigments or other laser-reactive fillers.

In any case, the marking element preferably is black, so that the marking element may be included as all or part of the black primary component of the colored image. In this case, the colored image can be decomposed into four color primaries, wherein the black primary color is distributed between the marking element and the printing element and is representing the alignment or connection or link in the security element.

The printing layer and/or the marking layer can be a continuous layer or an intermitted layer. An intermitted layer can comprise one or more segments, being formed by drops of ink, etc.

The marking layer is preferably configured to interact with impinging electromagnetic radiation such, that the marking element is generated at the region of impingement of the electromagnetic radiation. Additionally or alternatively, the printing layer is preferably configured such, that the reacted element is generated at the region of impingement of the electromagnetic radiation and/or in a region being different from the region of impingement of the electromagnetic radiation. Reacted elements being generated in a region being different from the region of impingement of the electromagnetic radiation are preferably generated in the event that the printing layer comprises elements being configured to block and/or modify a propagation of impinging electromagnetic radiation as described above.

The data carrier preferably furthermore comprises a grid and/or a viewing filter that is formed by two or more, preferably by a plurality of reacted elements.

Additionally or alternatively, the security element preferably corresponds to an optically variable element and/or has the shape of an image and/or of an alphanumeric character and/or is machine-readable and/or comprises encoded data and/or constitutes a QR code.

The grid and/or the viewing filter is preferably configured and/or arranged such, that one or more first parts of the marking layer are observable when the data carrier is observed by an observer under a first angle of observation, and that one or more second parts of said marking layer are observable when the data carrier is observed under a second angle of observation being different from the first angle of observation. In other words, by tilting the data carrier different parts of the marking layer are made visible to an observer by the grid and/or the viewing filter. Since the security element is distributed over several layers, an attempt of forgery will result in loss of functionality of said optically variable element.

In contrast to solutions from the prior art related to optically variable elements, wherein the grid or viewing filter is provided by printing several lines or the like onto a data carrier, the grid or viewing filter according to the present invention is generated by irradiating electromagnetic radiation onto the data carrier. As such, the present solution enables the generation of a grid or viewing filter having a high-resolution, namely a resolution being associated with a laser resolution as compared to a printing resolution.

An easy way of generating the grid or viewing filter comprises the printing of a printing layer consisting of black ink in a first step, and the selective removal of said black ink by the irradiation of electromagnetic radiation in a second step. Said selective removal preferably leads to a desired shape of the grid or viewing filter, e.g. if the black ink is removed in lines, the resulting grid or viewing filter will comprise black lines being composed of black ink and filter spaces where the black ink has been removed.

To this end, various shapes and dimensions of the individual components such as a grid period, a size and shape of the security element, a shape and direction of lines or the like constituting the grid and/or the viewing filter, etc., are conceivable.

The data carrier according to the invention can comprise further elements as they are known in the art. For instance, elements that serve the purpose of a print protection and/or exhibiting a tactile function could be added. Examples of such additional elements are commonly available inks used in inkjet personalization processes such as white inks or colourless varnishes.

In fact, when inkjet inks are used for generating the printing layer, depending on the inkjet inks (their film hardness, degree of curing, adhesion etc.) and the type of laser marking process there is a risk of reducing the abrasion resistance of the printing layer in the regions of the marking elements. Recent inkjet inks (most frequently forming hard films of UV-curable acrylic chemistry) have a generally higher abrasion resistance than the card bodies of data carriers (PC, PVC, ...) so that the abrasion resistance of inkjet prints is often higher than that of, for instance, surface features formed during the lamination. With the target of further increasing the scratch resistance in the event that inkjet inks are used for generating the printing layer on the top surface of the carrier body, i.e. when the printing layer is a surface print, it is therefore preferred to add a clear varnish at least partially onto the top layer of the data carrier, e.g. onto the printing layer comprising the reactive elements. An even stronger protection could be achieved in or around these areas by providing an anti-scratch varnish. For instance, a varnish such as an anti-scratch varnish could be arranged on top of the printing layer, i.e. before the printing layer when seen along the extension direction. Said varnish is preferably corresponds to a varnish that does not interfere with the impinging electromagnetic radiation. However, it is also conceivable that the varnish could be laser reactive and thus be a part of reactive elements

The security element can be provided in opaque structures as well as in transparent structures as long as a marking layer such as a laser-engravable layer is provided. An opaque structure is understood as at least a region of the data carrier being composed of one or more opaque layers, which are typically referred to as standard opaque plastic core layers, and/or metallic layers such as aluminium foils. A transparent structure is understood as at least a region of the data carrier being composed of one or more transparent layers or an area of the data carrier which does not include an opaque core as just described. Said transparent structure can be provided in the form of a clear window, i.e. a transparent insert element that is inserted into the data carrier.

In case of having a transparent structure or a clear window, there is an extra opportunity of adding further complexity to the security element for example by adding another filter and/or grid, or there is the possibility of combining with other security elements visible or personalizable from the reverse side.

The security element according to the present invention can be also compatible with the integration of OVI/hologram type elements frequently used in data carriers - or any other elements being transparent to standard personalization lasers, and can even represent an extra protection for them. In fact, placing an OVI/hologram-type element inside the document body protects the security element against the addition of opaque elements and an overprinting such as the printing of a different image. Moreover, placing a DOVID after the printing layer and before the marking layer with respect to the extension direction results in the DOVID being located in between the two layers containing the security element. Thus, DOVID would be securely "sealed" between the printing layer and the marking layer. Hence, the data carrier according to the invention preferably furthermore comprises at least one further security element being arranged at least partially between the printing layer and the marking layer with respect to the extension direction.

Moreover, an increase in the resolution or sharpness of the security element can be achieved by adding a CLI/MLI personalization module and thus the possibility of tilting the data carrier during the laser marking process and/or by placing the marking elements such as the black laser marks after the printing layer with respect to the extension direction.

The printing layer and the marking layer are preferably configured and/or arranged such, that the marking element and the reacted element are generated simultaneously or offset with respect to time. Additionally or alternatively the printing layer and the marking layer are preferably configured and/or arranged such, that the marking element and the reacted element are generated while the data carrier is stationary.

In the former case it is conceivable that the irradiation of electromagnetic radiation generates the reacted element and the marking element at the same time, i.e. the reacted element and the marking element can be generated during a single laser pass. In the latter case, it is conceivable that a first irradiation of electromagnetic radiation either generates the marking element (or the reacted element), and that a second irradiation of electromagnetic radiation at a later point in time generates the reacted element (or the marking element), i.e. the marking element and the reacted element can be generated during different laser passes. In both cases it is preferred that the data carrier remains stationary, i.e. is not moved, while the marking element and the reacted element are generated. Using one source of radiation for the generation of the reacted elements and the marking elements provides a high accuracy. However, it is likewise conceivable to generate the marking elements and the reacted elements with different sources of radiation such as different laser modules and/or during two or more laser passes, see also below. In addition, it is conceivable to use control means such as a camera control means as means of registration.

The printing layer and the marking layer are preferably configured such, that the marking element and the reacted element are generated upon an irradiation of a same electromagnetic radiation or of different electromagnetic radiation. A same electromagnetic radiation preferably has a same wavelength. Additionally or alternatively, different electromagnetic radiation preferably differs in its wavelength.

That is, it is conceivable that a same laser and/or a same wavelength of a laser is used to generate the marking element and the reacted element or that different lasers or different wavelengths of a same laser are used to generate the marking element and the reacted element, respectively. For instance, a commonly used source of radiation is a commercially available laser Nd:YAG laser emitting electromagnetic radiation at 1064 nanometers, and wherein said radiation is used for generating both the marking element and the reacted element. However, it is likewise conceivable that the fundamental frequency at 1064 nanometers is used for the generation of the marking elements and that the tripled-frequency at 355 nanometers is used for the generation of the reacted elements. Instead of using a single laser source operated at different frequencies it is likewise conceivable to use two distinct sources of radiation, etc. Furthermore, it is conceivable that one or more reactive elements are configured to react upon the irradiation of electromagnetic radiation and that one or more further reactive elements are configured to react upon the irradiation of further electromagnetic radiation being different from the electromagnetic radiation. For instance, the one or more reactive elements could correspond to C pigments that are bleached upon the irradiation of infrared radiation and the one or more further reactive elements could correspond to M pigments that are bleached upon the irradiation of visible radiation.

In addition, it is also preferred that the printing layer and the marking layer are configured to interact upon an irradiation of different electromagnetic radiation only. In other words, it is preferred that the printing layer is not sensitive to electromagnetic radiation the marking layer is sensitive to and/or vice versa. For instance, it is preferred that the marking layer is sensitive to electromagnetic radiation in the infrared region of the electromagnetic spectrum while the printing layer and/or the reactive elements are transparent in the infrared wavelength region. A printing layer and a marking layer being sensitive to different electromagnetic radiation brings the advantage that the data carrier does not need to be tilted nor are mirror arrangements or the like needed in order to generate marking elements in different angles. Instead, the marking elements can be generated by irradiating electromagnetic radiation at a fixed angle and yet achieve different appearances of the security element for different viewing angles. This is particularly beneficial in the event that the security element corresponds to an optically variable element. Further advantages lie in a business perspective, wherein the generation of the data carrier according to the invention can be implemented in any existing project, equipment, and product making this a straight forward upgrade and up-sell option for the technology. Secondly, the personalization will be faster without the tilting operation. At the same time the equipment is simpler as no extra tilting unit needs to be implemented. As a fourth benefit, thanks to the higher speed and better control of the personalization in the marking layer being arranged after the printing layer such as the CYMart ink layer with respect to the extension direction, a high number of sets of marking elements can be generated. For example two or more such as five sets of marking elements could be generated in the marking layer, each set being visible from different angles of observation enabling several further applications. The different sets of marking elements could correspond to different images and/or alphanumeric characters, for example. The different sets of marking elements could represent different data. The different sets of marking elements could differ from each other only slightly enabling an appearance of motion or animation with the marking elements. This also enables Moire type effects and e.g. an implementation of hidden data visible from only selected angle(s).

Two or more reactive elements are preferably randomly distributed in the printing layer or are arranged according to at least one pattern in the printing layer. Additionally or alternatively two or more reactive elements are preferably arranged in one or more parts of the printing layer or are arranged in the entire printing layer.

That is, the reactive elements can be randomly distributed in only part of or the entire printing layer or they can be arranged in a controlled way, e.g. in a certain pattern and/or in certain areas of the printing layer.

The printing layer and the marking layer are preferably arranged directly one after the other with respect to the extension direction. Alternatively, the printing layer and the marking layer are preferably arranged at a distance from one another and with respect to the extension direction.

That is, the printing layer and the marking layer can be arranged immediately adjacent to one another or on top of one another with respect to the extension direction. Likewise, it is conceivable that the printing layer and the marking layer are separated from one another with respect to the extension direction.

One or more transparent layers are preferably arranged between the printing layer and the marking layer with respect to the extension direction. Said transparent layers are preferably furthermore non-reactive layers, i.e. non-reactive to impinging electromagnetic radiation.

When the printing layer and the marking layer are arranged at a distance from one another it is preferred that one or more layers, preferably transparent layers, particularly preferably transparent and non-reactive layers are arranged between the printing layer and the marking layer with respect to the extension direction. Such a design is particularly preferred when the security element corresponds to an optically variable element.

At least one printed layer can be arranged before the printing layer and the marking layer with respect to the extension direction. Said printing layer is preferably at least partially covering the printed layer. The printed layer preferably differs from the printing layer in that it does not comprise any laser reactive elements. The printed layer preferably comprises or consists of ink such as inkjet print ink and/or screen-printing ink. The printed layer preferably has the shape of an alphanumeric character and/or of an image. The security element furthermore preferably comprises at least part of said printed layer.

It should be noted that the data carrier can comprise two or more security elements according to the invention. It should furthermore be noted that the data carrier can comprise one or more security elements as they are known in the art.

In another aspect, a secured article, in particular a security document, is provided. The secured article comprises or consists of at least one data carrier as described above. The secured article preferably is an identity card, a passport, a credit card, a bank note or the like.

It should be noted that said secured article is not limited to the field of security documents. Instead, a variety of articles to be protected by means of the data carrier are conceivable. In fact, the security element could be provided as a part of any article needing authentication, attribution of an individual code, etc. For instance, the secured article could correspond to luxury items or just preventing counterfeit in any kind of products.

In another aspect, a method of producing a data carrier, preferably a data carrier as described above, is provided. The method comprises the steps of i) providing at least one carrier body, ii) providing at least one printing layer, iii) providing at least one marking layer, and iv) providing at least one security element. The carrier body comprises a top surface, wherein the printing layer is arranged on the top surface of the carrier body. The printing layer and the marking layer are arranged at least partially above one another with respect to an extension direction. The marking layer is configured to interact with impinging electromagnetic such, that a marking element is generated in the marking layer upon the irradiation of electromagnetic radiation. The security element comprises at least part of the printing layer and at least part of the marking layer. The printing layer comprises at least one reactive element that is configured to interact with impinging electromagnetic radiation such, that a reacted element is generated in the printing layer upon the irradiation of electromagnetic radiation. The security element furthermore comprises the reacted element and the marking element.

In another aspect, a method of producing a data carrier, preferably a data carrier as described above, is provided. The method comprises the steps of i) providing at least one carrier body, ii) providing at least one printing layer, iii) providing at least one marking layer, and iv) providing at least one security element. The printing layer and the marking layer are arranged at least partially above one another with respect to an extension direction. The marking layer is configured to interact with impinging electromagnetic radiation such, that a marking element is generated in the marking layer upon the irradiation of electromagnetic radiation. The security element comprises at least part of the printing layer and at least part of the marking layer. The printing layer comprises at least one reactive element that is configured to interact with impinging electromagnetic radiation such, that a reacted element is generated in the printing layer upon the irradiation of electromagnetic radiation. The marking element is an opaque element. The security element furthermore comprises the reacted element and the marking element.

Any explanations provided herein above with respect to the data carrier per se likewise apply to the method of producing the data carrier and vice versa.

The printing layer is preferably provided before or after the marking element is generated. Additionally or alternatively the marking element and the reacted element are preferably generated simultaneously or offset with respect to time and/or while the data carrier is stationary.

Hence, the present invention provides different personalization order options. For instance, in a first step the marking elements could be generated. In other words, the laser marking could be performed first. Thereafter in a second step the printing layer could be printed.

An advantage of this option is the fact that any interactions between the marking elements and the printing layer are dispensed with. However, it is likewise conceivable that the printing layer is provided in a first step, and that the marking elements are generated thereafter in a second step. In the latter case, there is furthermore the possibility of adding additional reactive elements to the printing layer in order to induce a controlled interaction modifying both the printing layer and the marking layer.

Hence, in summary it can be said that the data carrier and the method according to the invention enables the generation of security elements in a simple and cost efficient way. In particular, no special or specific equipment or method steps are required. Moreover, the data carrier is fully personalizable, i.e. the security elements can be generated in one or two passes without the need of a precise mechanical registration. In addition, the generation of the reacted elements and of the marking elements is very accurate and the process times are considerably reduced. Moreover, no additional mechanical/camera registration is needed since the data carrier remains stationary during the one or two personalization passes.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1a: shows a sectional view of a data carrier comprising a marking layer in an unprocessed state;
- Fig. 1b: shows a sectional view of the data carrier according to figure 1a that further comprises a printing layer, wherein the printing layer is in a processed state;
- Fig. 1c: shows a sectional view of the data carrier according to figure 1b, wherein the marking layer is in a processed state, whereby a security element is generated;
- Fig. 2: shows a sectional view of a data carrier comprising a printing layer and a marking layer in a processed state, whereby a security element exhibiting different appearances depending on an angle of observation is generated;
- Fig. 3: shows a microscopic image of a data carrier comprising a security element under a particular angle of observation;
- Fig. 4: shows photographs of a data carrier comprising a security element under different angles of observation;
- Fig. 5: shows a microscopic image of the security element according to figure 4;
- Fig. 6: shows a security element under different angles of observation;
- Fig. 7: shows a perspective view on a security element comprising a surface structure;
- Fig. 8: shows a top view on a security element in the form of a QR code;
- Fig. 9a: shows a sectional view of a data carrier comprising a printing layer and a marking layer according to another aspect in an unprocessed state;
- Fig. 9b: shows a sectional view of the data carrier according to figure 9a, wherein the printing layer is in a processed state;
- Fig. 9c: shows a sectional view of the data carrier according to figure 9a, wherein the printing layer and the marking layer are in a processed state;
- Fig. 9d: shows another sectional view of the data carrier according to figure 9a, wherein the printing layer and the marking layer are in a processed state.

### DESCRIPTION OF PREFERRED EMBODIMENTS

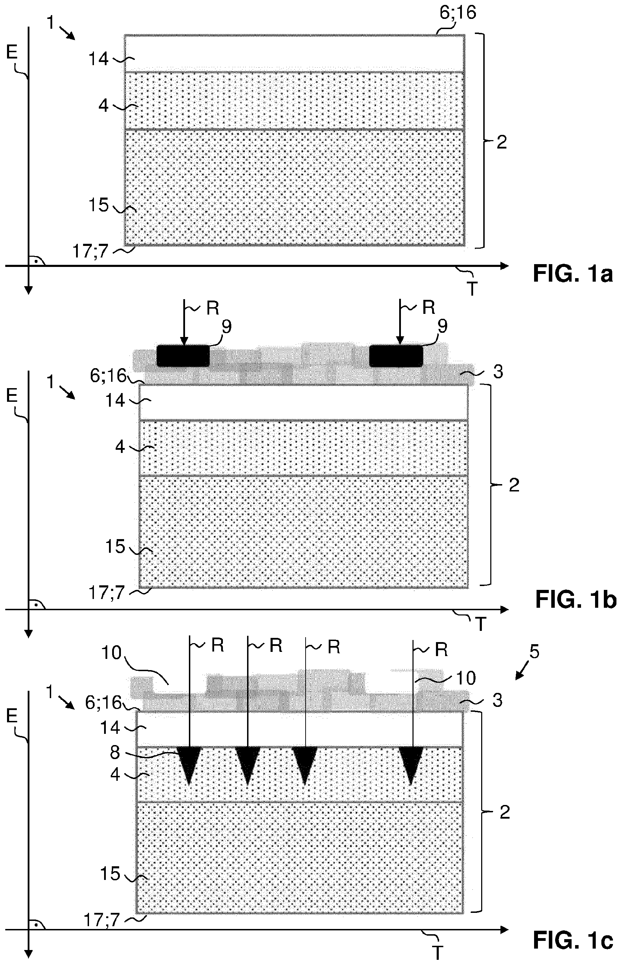

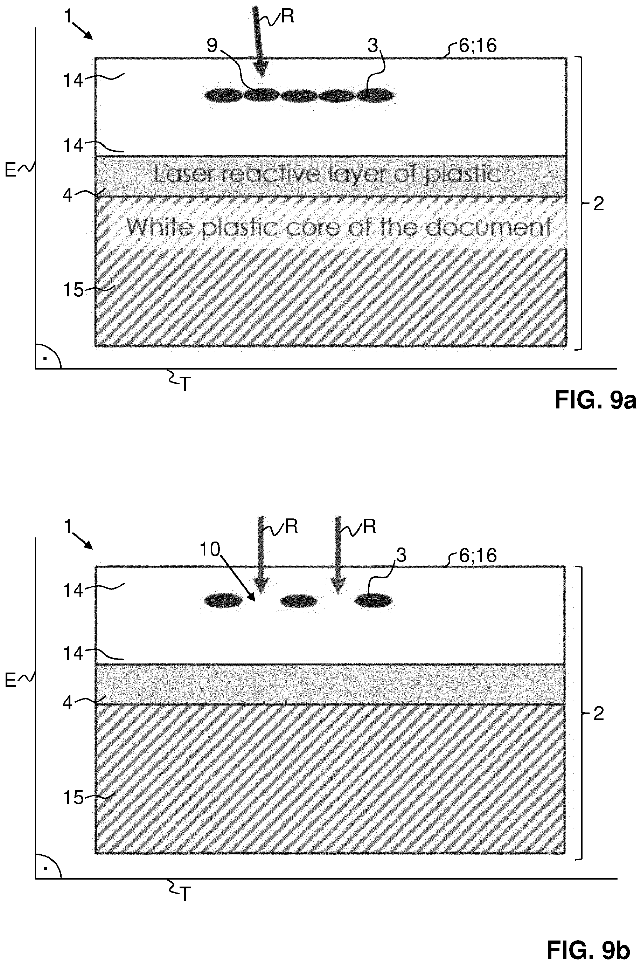

Various aspects of a data carrier 1 comprising a security element 5 according to the invention shall be discussed with reference to the figures. All data carriers have in common that they comprise at least one printing layer and at least one marking layer. The data carrier depicted in figures 1 to 8 differ from the data carrier depicted in figures 9a to 9d in the arrangement of the printing layer. In particular, whereas the printing layer in the data carrier depicted in figures 1 to 8 is arranged on a top surface of a carrier body of the data carrier, the printing layer of the data carrier according to figures 9a to 9d is arranged within the carrier body of the data carrier.

In fact, figure 1a depicts a data carrier 1 that comprises a carrier body 2 being constituted by three layers that are arranged above one another with respect to an extension direction E. The uppermost layer corresponds here to a transparent plastic layer 14. The lowermost layer corresponds to an opaque layer 15. The middle layer is provided by a marking layer 4 that is configured to interact with impinging electromagnetic radiation R, i.e. the marking layer 4 is laser-markable. As follows from figure 1b, a printing layer 3 can be arranged on a top surface 6 of the carrier body 2. The top surface 6 is provided by the top surface of the uppermost layer of the carrier body 2, which corresponds here to the transparent plastic layer 14, and a bottom surface 7 is provided by a surface of the lowermost layer of the carrier body 2, which corresponds here to the opaque layer 15, respectively. The extension direction E extends from the top surface 6 of the carrier body 2 towards the bottom surface 7 of the carrier body 2. In the depicted example, the top surface 6 of the carrier body 2 forms a top side 16 of the data carrier 1. The bottom surface 7 of the carrier body 2 in turn forms a bottom side 17 of the data carrier 1. Consequently, the printing layer 3 is arranged on the top side of the data carrier 1.

The printing layer 3 is applied by printing ink in order to produce a color element comprising four colours according to the CMYK color model, i.e. being decomposed into Cyan, Yellow, Magenta and BlacK (CMYK) color primaries. In the present example the printing layer 3 is provided as a continuous layer without any segments or interruptions therein. The printing layer 3 comprises reactive elements 9 that are configured to interact with impinging electromagnetic radiation R such, that a reacted element 10 is generated in the printing layer 3 upon the irradiation of electromagnetic radiation R. In the present example said reactive elements 9 are provided by the black ("Key") of the black inkjet ink. By irradiating electromagnetic radiation R on said reactive elements 9, reacted elements 10 in the form of evaporated elements are generated, see figure 1c. Furthermore, by irradiating electromagnetic radiation R onto the marking layer 4, marking elements 8 in the form of opaque marks are generated in the marking layer 4. Thereby, a security element 5 comprising the printing layer 3, the marking layer 4, the reacted elements 10 and the marking elements 8 is generated.

As further follows from figure 1c, the reacted elements 10 and the marking elements 8 are aligned with respect to one another according to an alignment arrangement. Said alignment scheme corresponds to a spatial arrangement of the marking elements 8 and the reacted elements 10 with respect to one another and with respect to the extension direction E as well as with respect to a transverse direction T extending perpendicularly to the extension direction E. The alignment arrangement can be seen as a link or interplay that is established between the reacted elements 10 and the marking elements 8 and thus between a first part of the security element 5 being provided by the printing layer 3 and the reacted elements 10 and a second part of the security element 5 being provided by the marking layer 4 and the marking elements 8. A forgery attempt will result in a loss of said alignment or link or interplay of the security element 5.

In the present example the marking elements 8 are arranged offset with respect to the reacted elements 10 and the extension direction E, i.e. they are vertically offset or not congruent with respect to the extension direction E. However, entirely congruent marking elements 8 and reacted elements 10 are likewise conceivable. Furthermore, the printing layer 3 and the marking layer 4 are arranged at a distance from one another and with respect to the extension direction E, i.e. these layers 3, 4 are separated from one another with respect to the extension direction E

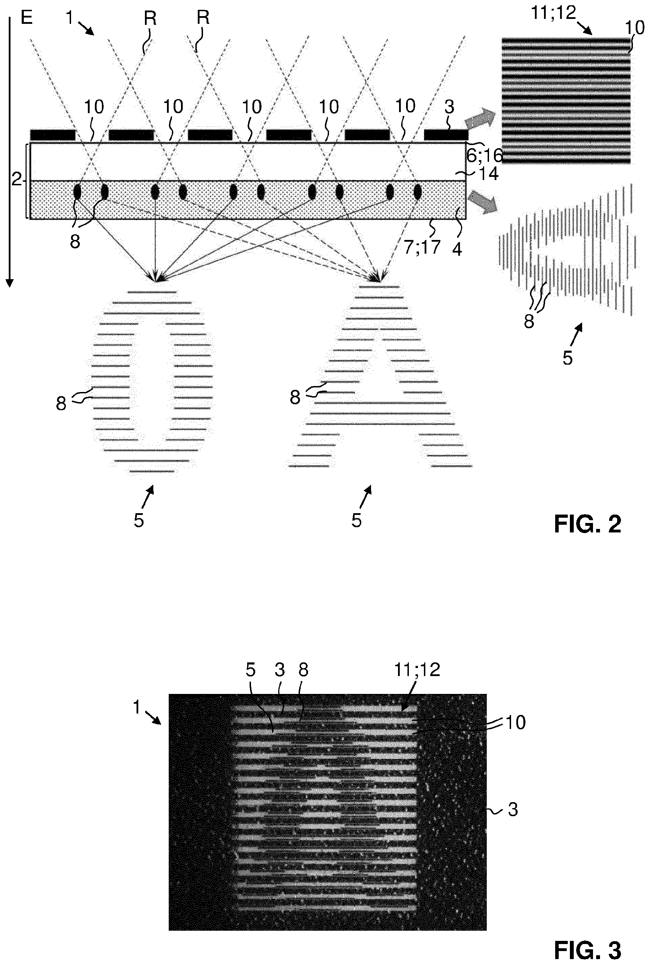

Figures 2 to 6 depict examples of a data carrier 1 comprising a printing layer 3 and a marking layer 4 being arranged at a distance from one another and with respect to the extension direction E, as well. Furthermore, and as follows from figure 2, a transparent and non-reactive layer 14 is provided between the printing layer 3 and the marking layer 4 in these cases as well. The presence of said distance results here in a security element 5 being optically variable, i.e. an appearance of the security element 5 changes in dependence of an angle of observation under which an observer observes the data carrier 1.

In particular, the printing layer 3 of the data carrier 1 of figure 2 has been treated with electromagnetic radiation R such, that reacted elements 10 have been evaporated. To this end the reacted elements 10 have been evaporated in a way that a grid 11 or viewing filter 12 being constituted by the remaining of the laser-treated printing layer 3 is generated. Said grid 11 or viewing filter 12 is configured and arranged such, that one or more first parts of the marking layer 4 are observable when the data carrier 1 is observed by an observer under a first angle of observation, and that one or more second parts of the marking layer 4 are observable when the data carrier 1 is observed under a second angle of observation being different from the first angle of observation. In other words, by tilting the data carrier 1 different parts of the marking layer 4 are made visible to an observer by the grid 11 and/or the viewing filter 12. In the present example the marking layer 4 has been laser-treated in that the security element 5 appears as characters "O" and "A" being formed by the marking elements 8. Hence, depending on the angle of observation or on the tilting of the data carrier 1, either the character "O" or the character "A" or a superposition of the characters "O" and "A" are visible.

Figure 3 depicts a microscopic image of a data carrier 1 comprising such a security element 5. From said image it can be seen that the grid 11 or viewing filter 12 corresponds here to a pattern of black lines being provided by black ink, and between which reacted elements 10 in the form of evaporated lines are arranged.

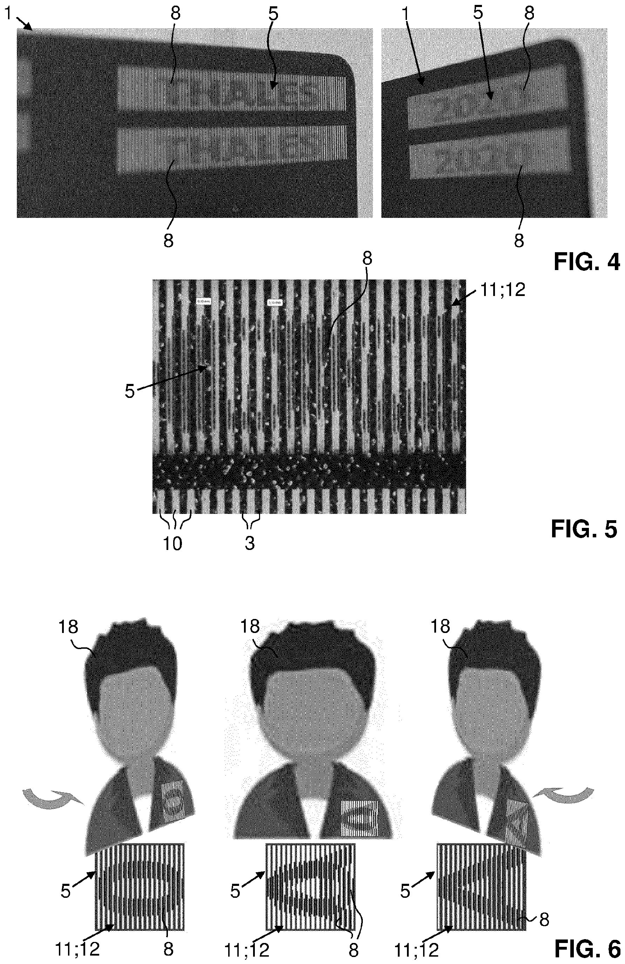

Figures 4 to 6 depict further examples of a security element 5 in the form of an optically variable element.

Namely, figure 4 depicts photographs of a data carrier 1 that were taken under two different angles of observation, wherein the viewing filter 12 or grid 11 results in the security element 5 appearing as the character "THALES" under the first angle of observation and appearing as numerals "2020" under the second angle of observation.

Figure 5 depicts a microscope image of the data carrier 1 according to figure 4. The period of the viewing filter 12 or grid 11 is 300 micrometer, which is shared approximately 1:1 between the filter lines or grid lines being composed of the printing layer 3 in the form of black ink on the top surface 6 of the carrier body 2, and filter spaces or grid spaces where the black ink has been removed and corresponding to reacted elements 10. These filter spaces or grid spaces 10 have been generated in a first laser pass. With a subsequent second laser pass, marking elements 8 in the form of the character "THALES" and the numerals "2020" have been generated in the marking layer 4. In the depicted micrograph, the left lines result in the second appearance ("02" from "2020"), and the right lines result in the first appearance ("A" letter from "THALES").

Figure 6 depicts an example of a simulated layout of a secured identity portrait 18. In fact, a regular security element 18 such as the identity portrait in the depicted example can be secured by the provision of a security element 5 according to the invention in the identity portrait 18. Here, said security element 5 again corresponds to an optically variable element appearing as the characters "O", "A" or a superposition thereof depending on an angle of observation. In other words, a tilting of the data carrier 1 visualizes different data inscribed in the regular security element 5, here embedded in a portrait image 18. The data can be a pre-defined information or can be personalized with specific information through data processing.

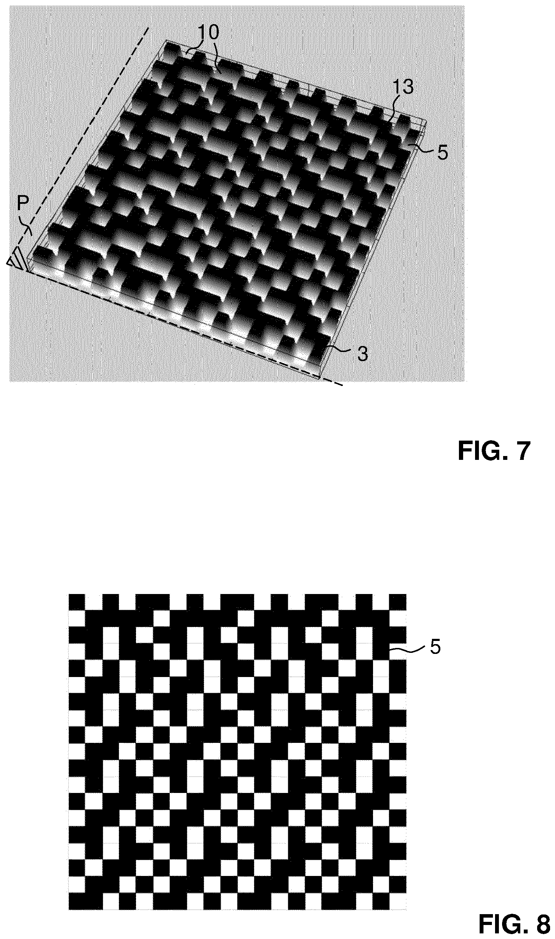

Figure 7 depicts a security element 5 comprising a surface structure 13. In particular, the printing layer 3 has been selectively ablated or evaporated such, that a relief structure 13 is generated in the printing layer 3. With respect to a plane P running centrally through the printing layer 3 a plurality of recesses and a plurality or protrusions extending from or into said plane can be identified. Depending on the order of magnitude of the surface structure 13, said surface structure 13 can provide a tactile effect that can be experienced by a person touching the surface structure 13 or said surface structure 13 can be by detected by dedicated equipment such as a profilometer.

Figure 8 depicts a security element 5 in the form of a QR code. To this end reacted elements 10 have been generated in the printing layer 3 such that a barcode containing information is produced.

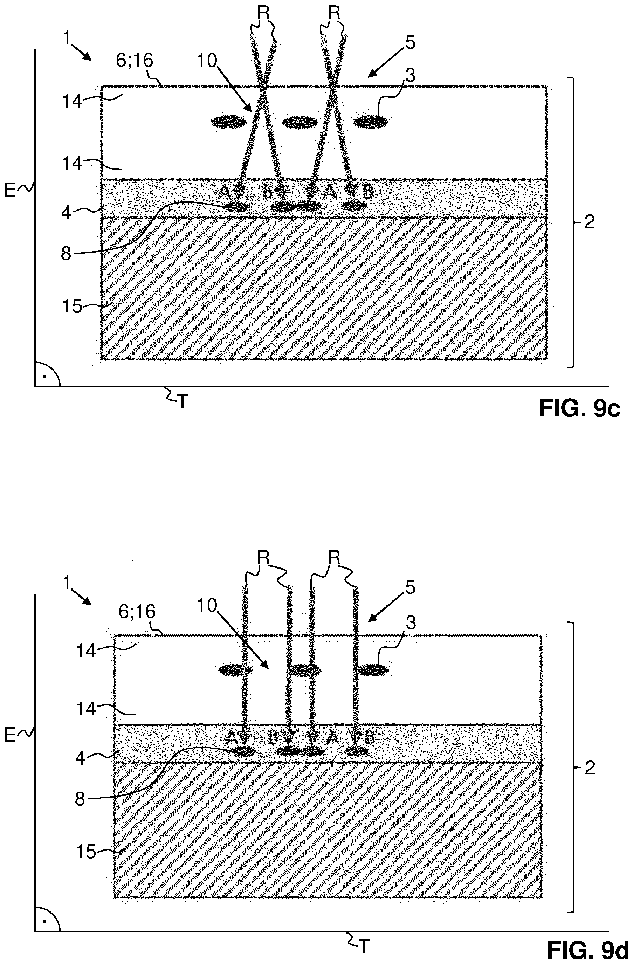

As mentioned initially, figures 9a to 9d depict a data carrier according to another embodiment, wherein the printing layer is arranged within the carrier body. As follows from these figures, the data carrier according to this embodiment likewise comprises a printing layer that is arranged between transparent polymer surfaces in an upper region of the carrier body. Furthermore, a marking layer, which is labelled as laser reactive layer of plastic, is arranged in a lower region of the carrier body. In other words, the marking layer is arranged after the printing layer when seen along the extension direction. The printing layer comprises reactive elements as has been described above. Hence, upon an irradiation of electromagnetic radiation onto the reactive elements, reacted elements here in the form of bleached elements or ablated elements are generated at the region of impingement, see figure 9b. Upon an irradiation of electromagnetic radiation on the marking layer, marking elements are generated in the marking layer at the region of impingement as well, see figures 9c and 9d. In these figures the marking elements correspond to opaque elements in the form of the alphanumeric characters "A" and "B". As furthermore follows from figures 9a to 9d, the printing layer and the marking layer are arranged at a distance from one another and with respect to the extension direction, wherein said distance is occupied with one or more transparent layers of the card body. As such, the security element being constituted by the printing layer and the marking layer upon their interaction with the electromagnetic radiation is an optically variable element.

In the following two preferred examples of generating a security element in the data carrier according to figures 1 to 8 and in the data carrier according to figures 9a to 9d are presented. Said security element preferably corresponds to an optically variable element. In this regard it is noted that the data carrier according to figures 9a to 9d is based on similar principles as the data carrier according to figures 1 to 8, wherein optically variable security elements applicable for personalization based on inkjet printing onto the top surface of the carrier body and laser engraving inside the carrier body is conceivable, for instance. The data carrier according to figures 9a to 9d however is based on the idea of using a laser reactive ink in the inkjet printing and thereafter use a laser to ablate this ink and make markings inside the document structure using a second pass of the laser. This process enables very precise registration between the two steps and a very high resolution of the marking as well as laser engraving in different angles such that one sees different markings depending on the viewing angle. In fact, in the data carrier according to figures 9a to 9d the same principle as disclosed with reference to figures 1 to 8 is extended to the CLS personalization technology. In this second embodiment, marking is done inside the data carrier. The colors are created, not by additive printing like in the example of the data carrier according to the first embodiment of figures 1 to 8, but by bleaching cyan, yellow, and magenta colored pigments arranged inside the carrier body during the manufacturing process as the so called CYMart ink. This bleaching is done using a set of red, green, and blue lasers. The unbleached ink is dark in itself but the contrast of the security element such as a photograph is typically enhanced using a fourth laser operating in infrared wavelength range and resulting in black marking into a layer below the CYMart ink, i.e., deeper inside the carrier body.

The CLS personalization technology and the arrangement of the printing layer, here the CYMart layer, closer to the top surface of the carrier body than the marking elements such as black laser engraved markings in the marking layer can be utilized to achieve marking of similar gray level into two. In figures 9a to 9d the reactive elements, i.e. the pigments of different colors, and lasers of different wavelengths are not shown separately. The bleaching from the ink's original dark color to transparent requires the operation of each of the red, green, and blue lasers. With proper control these lasers do not generate marking elements in the marking layer but only the infrared laser created marking elements in that layer. This operation is shown in figure 9c, with the marking elements A and B finally visible from different angles of observation. Furthermore, as the printing layer, here the CYMart ink layer, is transparent in the infrared wavelengths, one does not need to implement any tilting mechanisms or mirror arrangements to make the laser marking in different angles but can in fact make the black marking from a fixed angle and yet achieve different appearance for different angles of observation, see figure 9d.

**LIST OF REFERENCE SIGNS**

| | | | |
|---|---|---|---|
| 1 | data carrier | 13 | surface structure |
| 2 | carrier body | 14 | layer |
| 3 | printing layer | 15 | layer |
| 4 | marking layer | 16 | top side |
| 5 | security element | 17 | bottom side |
| 6 | top surface | 18 | further security element |
| 7 | bottom surface | | |
| 8 | marking element | E | extension direction |
| 9 | reactive element | T | transverse direction |
| 10 | reacted element | R | electromagnetic radiation |
| 11 | grid | P | plane |
| 12 | viewing filter | | |

## Claims

1. A data carrier (1) comprising:
- at least one carrier body (2);
- at least one printing layer (3);
- at least one marking layer (4); and
- at least one security element (5);
wherein the carrier body (2) comprises a top surface (6),
wherein the printing layer (3) is arranged on the top surface (6) of the carrier body (2),
wherein the printing layer (3) and the marking layer (4) are arranged at least partially above one another with respect to an extension direction (E),
wherein the marking layer (4) is configured to interact with impinging electromagnetic radiation (R) such, that a marking element (8) is generated in the marking layer (4) upon the irradiation of electromagnetic radiation (R), and
wherein the security element (5) comprises at least part of the printing layer (3) and at least part of the marking layer (4),
**characterized in that** the printing layer (3) comprises at least one reactive element (9) that is configured to interact with impinging electromagnetic radiation (R) such, that a reacted element (10) is generated in the printing layer (3) upon the irradiation of electromagnetic radiation (R), and
**in that** the security element (5) furthermore comprises the reacted element (10) and the marking element (8).

2. The data carrier (1) according to claim 1, wherein the marking element (8) is a bleached element and/or an opaque element, and/or
furthermore comprising a surface structure (13) that is formed by two or more, preferably by a plurality of reacted elements (10).

3. A data carrier (1) comprising:
- at least one carrier body (2);
- at least one printing layer (3);
- at least one marking layer (4); and
- at least one security element (5);
wherein the printing layer (3) and the marking layer (4) are arranged at least partially above one another with respect to an extension direction (E),
wherein the marking layer (4) is configured to interact with impinging electromagnetic radiation (R) such, that a marking element (8) is generated in the marking layer (4) upon the irradiation of electromagnetic radiation (R), and
wherein the security element (5) comprises at least part of the printing layer (3) and at least part of the marking layer (4),
**characterized in that** the printing layer (3) comprises at least one reactive element (9) that is configured to interact with impinging electromagnetic radiation (R) such, that a reacted element (10) is generated in the printing layer (3) upon the irradiation of electromagnetic radiation (R),
**in that** the marking element (8) is an opaque element, and
**in that** the security element (5) furthermore comprises the reacted element (10) and the marking element (8).

4. The data carrier (1) according to any one of the preceding claims, wherein the reacted element (10) and the marking element (8) are aligned with respect to one another according to an alignment arrangement,
wherein the alignment arrangement preferably corresponds to a spatial arrangement of the marking element (8) and the reacted element (10) with respect to one another and preferably with respect to the extension direction (E) and/or with respect to a transverse direction (T) extending perpendicularly with respect to the extension direction (E).

5. The data carrier (1) according to any one of the preceding claims, wherein the reactive element (9) comprises a reactive pigment and/or a reactive additive and/or a reactive colorant and/or a component being configured to block and/or modify a propagation of impinging electromagnetic radiation (R) such as a filler material being configured to scatter impinging electromagnetic radiation (R), and/or
wherein the reacted element (10) is a bleached element and/or an ablated element and/or an evaporated element and/or a colour-changed element and/or an opaque element and/or a bubbling element and/or a bulging element and/or a blurry element and/or a fuzzy element.

6. The data carrier (1) according to any one of the preceding claims, wherein the printing layer (3) comprises or consists of ink, preferably inkjet print ink and/or screen-printing ink and/or thermochromic ink and/or photochromic ink, and/or
wherein the marking layer (4) comprises or consists of a C-doped layer and/or of at least one plastics and/or of one or more polymers, the marking layer (4) particularly preferably comprises or consists of polycarbonate and/or polyvinyl chloride and/or polyethylene terephthalate and/or polyethylene and/or cross-linked polyethylene and/or polypropylene and/or copolymers thereof and/or mixtures thereof, and/or
wherein the printing layer (3) and/or the marking layer (4) is a continuous layer or an intermitted layer.

7. The data carrier (1) according to any one of the preceding claims, wherein the marking layer (4) is configured to interact with impinging electromagnetic radiation (R) such, that the marking element (8) is generated at the region of impingement of the electromagnetic radiation (R), and/or
wherein the printing layer (3) is configured such, that the reacted element (10) is generated at the region of impingement of the electromagnetic radiation (R) and/or in a region being different from the region of impingement of the electromagnetic radiation (R).

8. The data carrier (1) according to any one of the preceding claims, furthermore comprising a grid (11) and/or a viewing filter (12) that is formed by two or more, preferably by a plurality of reacted elements (10), and/or
wherein the security element (5) corresponds to an optically variable element and/or has the shape of an image and/or of an alphanumeric character and/or is machine-readable and/or comprises encoded data and/or constitutes a QR code.

9. The data carrier (1) according to any one of the preceding claims, wherein the printing layer (3) and the marking layer (4) are configured and/or arranged such, that the marking element (8) and the reacted element (10) are generated simultaneously or offset with respect to time, and/or
wherein the printing layer (3) and the marking layer (4) are configured and/or arranged such, that the marking element (8) and the reacted element (10) are generated while the data carrier (1) is stationary.

10. The data carrier (1) according to any one of the preceding claims, wherein the printing layer (3) and the marking layer (4) are configured such, that the marking element (8) and the reacted element (10) are generated upon an irradiation of a same electromagnetic radiation (R) or of different electromagnetic radiation (R), and
wherein the same electromagnetic radiation (R) preferably has a same wavelength, and/or
wherein different electromagnetic radiation (R) preferably differs in its wavelength.

11. The data carrier (1) according to any one of the preceding claims, wherein the printing layer (3) and the marking layer (4) are arranged directly one after the other with respect to the extension direction (E), or
wherein the printing layer (3) and the marking layer (4) are arranged at a distance from one another and with respect to the extension direction (E), and/or
wherein one or more transparent layers (14) are arranged between the printing layer (3) and the marking layer (4) with respect to the extension direction (E).

12. A secured article, in particular a security document, the secured article comprising or consisting of at least one data carrier (1) according to any one of the preceding claims and preferably is an identity card, a passport, a credit card, a bank note or the like.

13. A method of producing a data carrier (1), preferably a data carrier as claimed in any one of claims 1 to 11, the method comprising the steps of:
- Providing at least one carrier body (2);
- Providing at least one printing layer (3);
- Providing at least one marking layer (4); and
- Providing at least one security element (5);
wherein the carrier body (2) comprises a top surface (6),
wherein the printing layer (3) is arranged on the top surface (6) of the carrier body (2),
wherein the printing layer (3) and the marking layer (4) are arranged at least partially above one another with respect to an extension direction (E),
wherein the marking layer (4) is configured to interact with impinging electromagnetic radiation (R) such, that a marking element (8) is generated in the marking layer (4) upon the irradiation of electromagnetic radiation (R), and
wherein the security element (5) comprises at least part of the printing layer (3) and at least part of the marking layer (4),
**characterized in that** the printing layer (3) comprises at least one reactive element (9) that is configured to interact with impinging electromagnetic radiation (R) such, that a reacted element (10) is generated in the printing layer (3) upon the irradiation of electromagnetic radiation (R), and
**in that** the security element (5) furthermore comprises the reacted element (10) and the marking element (8).

14. A method of producing a data carrier (1), preferably a data carrier as claimed in any one of claims 3 to 11, the method comprising the steps of:
- Providing at least one carrier body (2);
- Providing at least one printing layer (3);
- Providing at least one marking layer (4); and
- Providing at least one security element (5);
wherein the printing layer (3) and the marking layer (4) are arranged at least partially above one another with respect to an extension direction (E),
wherein the marking layer (4) is configured to interact with impinging electromagnetic radiation (R) such, that a marking element (8) is generated in the marking layer (4) upon the irradiation of electromagnetic radiation (R), and
wherein the security element (5) comprises at least part of the printing layer (3) and at least part of the marking layer (4),
**characterized in that** the printing layer (3) comprises at least one reactive element (9) that is configured to interact with impinging electromagnetic radiation (R) such, that a reacted element (10) is generated in the printing layer (3) upon the irradiation of electromagnetic radiation (R),
**in that** the marking element (8) is an opaque element, and
**in that** the security element (5) furthermore comprises the reacted element (10) and the marking element (8).

15. The method according to claim 13 or 14, wherein the printing layer (3) is provided before or after the marking element (8) is generated, and/or
wherein the marking element (8) and the reacted element (10) are generated simultaneously or offset with respect to time and/or while the data carrier (1) is stationary.
